# EUROPEAN PATENT APPLICATION

(11) **EP 4 831 069 A1**
(43) Date of publication of application: **28.10.2026**
(21) Application number: 24906960.0
(22) Date of filing: 07.11.2024
(51) Int. Cl.: B64U 50/13, B60K 17/02, B64C 11/48, B64C 27/08, B64C 29/00, B64D 27/04, B64D 27/10, B64D 27/33, B64D 31/18, B64D 35/023, B64D 35/04, B64U 10/16, B64U 10/20, B64U 10/25, B64U 30/10, B64U 30/24, B64U 50/11, B64U 50/12, B64U 50/19, B64U 50/33

(54) **FLIGHT DEVICE**

(30) Priority: 19.12.2023 JP 2023213823
(71) Applicant: Ishikawa Energy Research Co., Ltd., Ota-shi, Gunma 379-2304 (JP)
(72) Inventor: ISHIKAWA Mitsuru, Ota-shi, Gunma 379-2304 (JP); YAMAZAKI Masakazu, Ota-shi, Gunma 379-2304 (JP)
(74) Representative: Plasseraud IP
(86) International application number: PCT/JP2024/039612
(87) International publication number: WO 2025/134572

(57) **Abstract**

Provided is a flight device which can achieve high levels of stability, efficiency, and long-time flight at the time of the flight. A flight device 10 includes a vertical-flight rotor 11 and a horizontal-flight rotor 12. The vertical-flight rotor 11 is rotated by a motor 13. The horizontal-flight rotor 12 is drivingly connected and rotated by an engine 40. In this way, since the vertical-flight rotor 11 is rotated by the motor 13, the rotational speed of the vertical-flight rotor 11 can be highly precisely controlled by the motor 13 at the time of the takeoff and landing. In addition, at the time of the horizontal flight, since the engine 40 drivingly rotates the horizontal-flight rotor 12, the horizontal-flight rotor 12 can be highly efficiently rotated, and the continuous flight distance of the flight device 10 can be increased.

## Description

### TECHNICAL FIELD

The present invention relates to a flight device, and particularly relates to a flight device capable of flying along a vertical direction and a horizontal direction.

### BACKGROUND ART

Flight devices capable of unmanned flight in the air have conventionally been known. Such a flight device is capable of flying in the air with thrust of a rotor which rotates about a vertical axis.

The application fields of such flight devices include, for example, the field of transportation, the field of surveying, and the field of photographing, and the like. In the case of applying flight devices to such fields, a survey device and an imaging device are attached to the flight devices. When flight devices are applied to such fields, the flight devices can be caused to fly areas that human cannot access and perform transportation, imaging, and measurement in such areas. An invention relating to such flight devices is described in, for example, Patent Literature 1.

In addition, in order to achieve further long-distance flight, a flight device described in Patent Literature 2 has been developed. The flight device described in Patent Literature 2 is called a parallel hybrid drone, and includes a main rotor which is rotated by an engine and a sub-rotor which is rotated by a motor. The main rotor is rotated to generate thrust for allowing the flight device to float in the air. The sub-rotor is rotated to control the positional orientation of the flight device in the air.

On the other hand, flight devices called vertical take-off and landing airplanes have been developed. A vertical take-off and landing airplane is called a VTOL (vertical take-off and landing). The VTOL can conduct landing and takeoff along a vertical direction by rotating a rotor about a vertical axis. Moreover, the VTOL can fly along a horizontal direction by rotating the rotor about a horizontal axis. An example of inventions relating to VTOLs is described in Patent Literature 3 given below or the like.

### CITATION LIST

### PATENT LITERATURE

Patent Literature 1: Japanese Patent Application Publication No. 2012-51545
Patent Literature 2: Japanese Patent Application Publication No. 2021-020674
Patent Literature 3: Japanese Patent Application Publication No. 2013-32146

### SUMMARY OF THE INVENTION

### TECHNICAL PROBLEM

However, the inventions of the aforementioned Patent Literatures and the like still have room for improvement from the viewpoint of achieving high levels of stability, efficiency, and long-time flight at the time of the flight.

Specifically, in the VTOL described aforementioned Patent Literature 3, all the rotor are electrically rotated by motors. Hence, since it is difficult to mount a large-capacity battery in the flight device, there is a problem that it is not easy to increase the continuous flight distance of the VTOL. In addition, if takeoff and landing as well as horizontal flight are conducted by common rotors, the control of the rotors becomes complicated, so that there is a problem that it is not necessarily easy to ensure stability at the time of the flight.

The present invention has been made in view of such problems, and an object of the present invention is to provide a flight device which can achieve high levels of stability, efficiency, and long-time flight at the time of the flight.

### SOLUTION TO PROBLEM

A flight device of the present invention includes: a vertical-flight rotor; and a horizontal-flight rotor, wherein the vertical-flight rotor is rotated by a motor, and the horizontal-flight rotor is drivingly connected and rotated by an engine.

### ADVANTAGEOUS EFFECTS OF INVENTION

The flight device of the present invention includes: a vertical-flight rotor; and a horizontal-flight rotor, wherein the vertical-flight rotor is rotated by a motor, and the horizontal-flight rotor is drivingly connected and rotated by an engine. According to the flight device of the present invention, since the vertical-flight rotor is rotated by the motor, the rotational speed of the vertical-flight rotor can be highly precisely controlled by the motor at the time of the takeoff and landing. In addition, at the time of the horizontal flight, since the engine drivingly rotates the horizontal-flight rotor, the horizontal-flight rotor can be highly efficiently rotated, and the continuous flight distance of the flight device can be increased.

### BRIEF DESCRIPTION OF DRAWINGS

[FIG. 1] FIG. 1 is a top view showing a flight device according to an embodiment of the present invention.
[FIG. 2] FIG. 2 is a top view showing a vicinity of an engine and horizontal-flight rotors of the flight device according to the embodiment of the present invention.
[FIG. 3] FIG. 3 is a top view showing a vicinity of the engine of the flight device according to the embodiment of the present invention.
[FIG. 4] FIG. 4 is a top view showing a flight device of another embodiment of the present invention.
[FIG. 5] FIG. 5 is a side view showing the flight device according to the other embodiment of the present invention.
[FIG. 6] FIG. 6 is a top view showing a vicinity of an engine and horizontal-flight rotors of the flight device according to the other embodiment of the present invention.

### DESCRIPTION OF EMBODIMENTS

Hereinafter, a flight device 10 according to an embodiment of the present invention will be described in detail based on the drawings. In the following description, front, rear, left, and right directions are used. The front direction is a direction in which the flight device 10 travels at the time of the flight, and the rear direction is a direction opposite to the front direction. The left and right directions are left and right directions in the case where the flight device 10 is viewed from the front direction. In addition, in the following description, the same members are denoted by the same reference signs, and repetitive description is omitted.

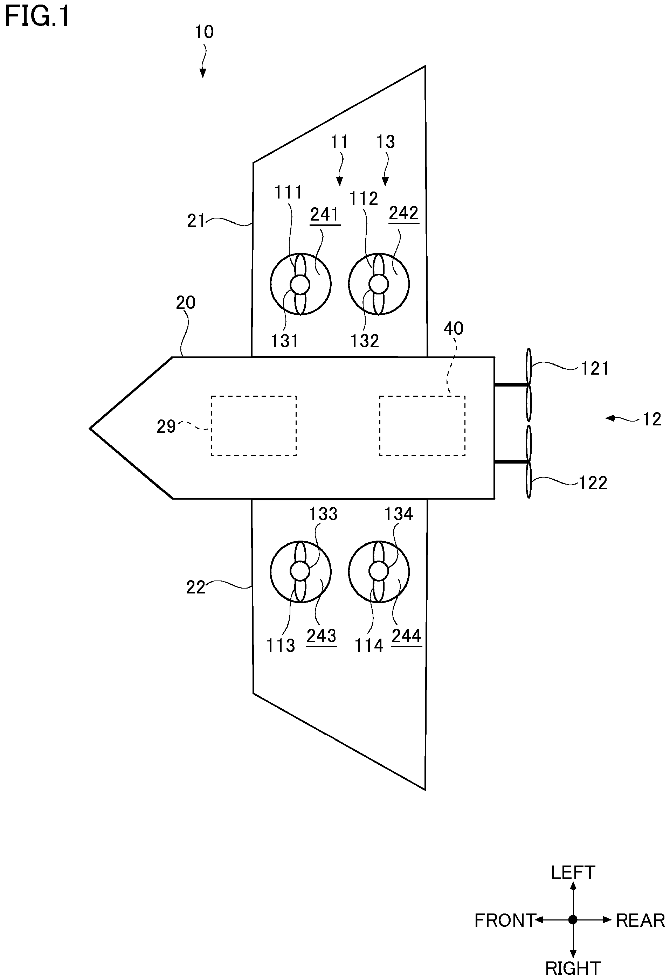

FIG. 1 is a top view showing the flight device 10.

The flight device 10 is a device which includes vertical-flight rotors 11 and horizontal-flight rotors 12 to fly in the air. Specifically, the flight device 10 is a VTOL. The flight device 10 can execute takeoff and landing along a vertical direction by the rotation of the vertical-flight rotors 11. Moreover, the flight device 10 can fly in the front direction along a horizontal direction by the rotation of the horizontal-flight rotors 12. In addition, the flight device 10 is also called a drone, a hybrid drone, or a parallel hybrid drone.

Specifically, the flight device 10 mainly includes a main body portion 20, a first wing portion 21 and a second wing portion 22, the vertical-flight rotors 11, the horizontal-flight rotors 12, and an engine 40. Besides these devices, the flight device 10 includes transmission devices and the like such as sensors and a CPU, a fuel tank, baggage to be transported, and the like.

The main body portion 20 is a member which is formed of synthetic resin plates or metal plates, or the like and has a substantially cylindrical shape extending along the front and rear directions. Inside the main body portion 20, the engine 40, various electric components, baggage, and the like are housed.

The first wing portion 21 and the second wing portion 22 are wing-shaped portions which extend from the main body portion 20 in the left and right directions. The first wing portion 21 extends from the left side surface of the main body portion 20 in the left direction. The second wing portion 22 extends from the right side surface of the main body portion 20 in the right direction.

The vertical-flight rotors 11 are rotors which are rotated by motor 13. The vertical-flight rotors 11 rotate about vertical axes at the time of the takeoff, landing, and hovering of the flight device 10. The rotations of the vertical-flight rotors 11 in this way allow the flight device 10 to ascend, descend, or hover along the vertical direction. The positions of the vertical-flight rotors 11 may be fixed such that the rotation axes are perpendicular to a horizontal plane, which is a main plane of the first wing portion 21 and the second wing portion 22. Moreover, the vertical-flight rotors 11 may be configured such that the rotation axes can be displaced by an actuator or the like.

Specifically, the vertical-flight rotors 11 include a first sub-rotor 111 to a fourth sub-rotor 114.

The first sub-rotor 111 and the second sub-rotor 112 are provided in the first wing portion 21. The first sub-rotor 111 is disposed inside a first installation hole 241, which is a substantially circular through-hole provided in the first wing portion 21. The first sub-rotor 111 is rotated by a first motor 131. The second sub-rotor 112 is disposed inside a second installation hole 242, which is a substantially circular through-hole provided in the first wing portion 21. The second sub-rotor 112 is rotated by a second motor 132.

The third sub-rotor 113 and the fourth sub-rotor 114 are provided in the second wing portion 22. The third sub-rotor 113 is disposed inside a third installation hole 243, which is a substantially circular through-hole provided in the second wing portion 22. The third sub-rotor 113 is rotated by a third motor 133. The fourth sub-rotor 114 is disposed inside a fourth installation hole 244, which is a substantially circular through-hole provided in the second wing portion 22. The fourth sub-rotor 114 is rotated by a fourth motor 134.

The horizontal-flight rotors 12 are rotors which are drivingly connected and rotated by the engine 40. The horizontal-flight rotors 12 rotate about the horizontal axes, which are in a long-axis direction of the main body portion 20 at the time of the horizontal flight of the flight device 10. The rotations of the horizontal-flight rotors 12 in this way allow the flight device 10 to fly in the front direction along the horizontal direction.

The horizontal-flight rotors 12 include a first horizontal-flight rotor 121 and a second horizontal-flight rotor 122. The first horizontal-flight rotor 121 and the second horizontal-flight rotor 122 are in parallel along the left and right directions in a rear end of the main body portion 20. The rotations of the first horizontal-flight rotor 121 and the second horizontal-flight rotor 122 about horizontal axes which are along the front and rear directions generate thrust to push the flight device 10 in the front direction.

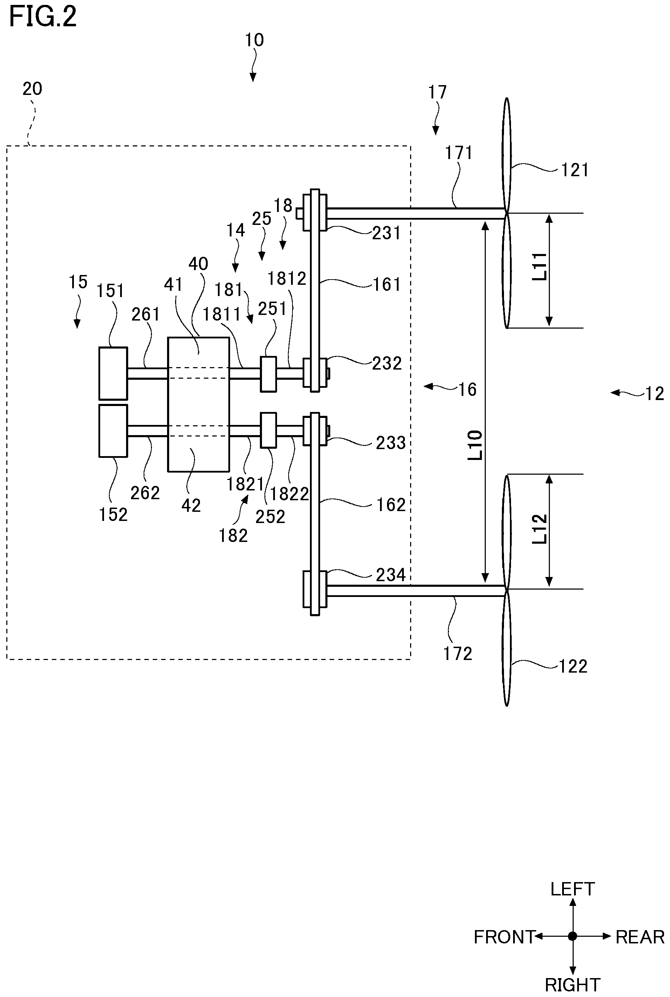

A driving-force transmission structure which transmits a driving force of the engine 40 to the first horizontal-flight rotor 121 and the second horizontal-flight rotor 122 will be described with reference to FIG. 2.

An arithmetic control unit 29 is, for example, a CPU, and controls operations of devices such as the vertical-flight rotors 11 and the horizontal-flight rotors 12 upon receipt of outputs of the sensors mounted on the flight device 10.

In the present embodiment, the vertical-flight rotors 11 are rotated by the motor 13, and the rotational speeds of the vertical-flight rotors 11 can be highly precisely controlled by the motor 13 at the time of the takeoff, landing, and hovering, so that the stability of the flight device 10 in the air can be ensured. In addition, at the time of the horizontal flight, the engine 40 drivingly rotates the horizontal-flight rotors 12, so that the horizontal-flight rotors 12 can be highly efficiently rotated, and the continuous flight distance of the flight device 10 can be increased.

FIG. 2 is a top view showing the driving-force transmission structure in a vicinity of the engine 40 and the horizontal-flight rotors 12 of the flight device 10.

As mentioned above, in the present embodiment, the horizontal-flight rotors 12 are driven by the engine 40. In addition, a driving-force connection and disconnection unit 25 is disposed between the engine 40 and the horizontal-flight rotors 12.

When a drive configuration in the peripheral portion of the engine 40 will be described, as means for transmitting the driving force, engine-side drive shafts 18, the driving-force connection and disconnection unit 25, a driving-force transmission unit 16, and rotor drive shafts 17 are disposed between the engine 40 and the horizontal-flight rotors 12. Moreover, power generator 15 which are driven by the engine 40 are disposed in the vicinity of the engine 40.

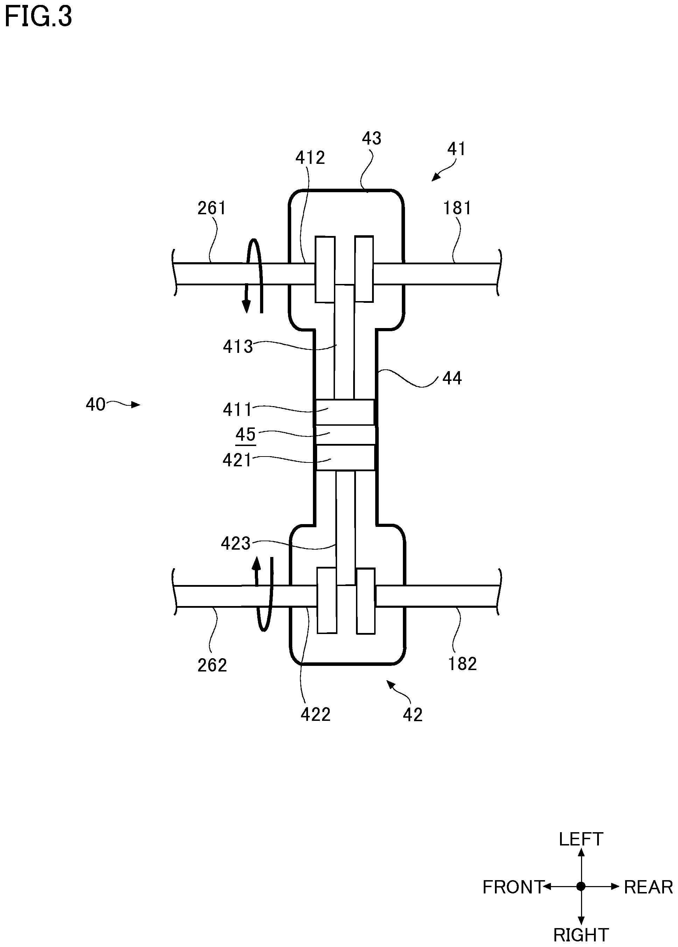

The engine 40 includes a first engine unit 41 and a second engine unit 42 which are arranged opposite to each other, so that low vibrations are achieved, as described later. The first engine unit 41 generates a rotational driving force for driving the first horizontal-flight rotor 121 and a power generator 151. The second engine unit 42 generates a rotational driving force for driving the second horizontal-flight rotor 122 and a power generator 152. A specific structure of the engine 40 will be described with reference to FIG. 3.

The engine-side drive shafts 18 are drive shafts which are connected to crankshafts of the engine 40, which will be described later, to rotate. A first engine-side drive shaft 181 and a second engine-side drive shaft 182 extend from the engine 40 as the engine-side drive shafts 18.

The first engine-side drive shaft 181 is a drive shaft which is connected to a first crankshaft 412 of the first engine unit 41, which will be described later, and transmits a rotational driving force for rotating the first horizontal-flight rotor 121. The first engine-side drive shaft 181 includes a first front-side drive shaft 1811 which is a front-side portion thereof and a first rear-side drive shaft 1812 which is a rear-side portion thereof. A first driving-force connection and disconnection unit 251, which will be described later, is disposed between the first front-side drive shaft 1811 and the first rear-side drive shaft 1812. In addition, a second pulley 232 is connected to a rear end of the first rear-side drive shaft 1812 in such a manner as to be non-rotatable relative to the first rear-side drive shaft 1812.

The second engine-side drive shaft 182 is a drive shaft which is connected to a second crankshaft 422 of the second engine unit 42, which will be described later, and transmits a rotational driving force for rotating the second horizontal-flight rotor 122. The second engine-side drive shaft 182 includes a second front-side drive shaft 1821 which is a front-side portion thereof and a second rear-side drive shaft 1822 which is a rear-side portion thereof. A second driving-force connection and disconnection unit 252, which will be described later, is disposed between the second front-side drive shaft 1821 and the second rear-side drive shaft 1822. In addition, a third pulley 233 is connected to a rear end of the second rear-side drive shaft 1822 in such a manner as to be non-rotatable relative to the second rear-side drive shaft 1822.

The driving-force connection and disconnection unit 25 is a device which is arranged between the engine 40 and the horizontal-flight rotors 12, and connects and disconnects a driving force transmitted from the engine 40 to the horizontal-flight rotors 12. As the driving-force connection and disconnection unit 25, a clutch can be employed, and specifically an electromagnetic clutch, a centrifugal clutch, or the like can be employed. The driving-force connection and disconnection unit 25 includes a first driving-force connection and disconnection unit 251 and a second driving-force connection and disconnection unit 252.

The first driving-force connection and disconnection unit 251 is disposed between the first front-side drive shaft 1811 and the first rear-side drive shaft 1812. When the first driving-force connection and disconnection unit 251 is brought into connected state, the rotational driving force is transmitted from the first front-side drive shaft 1811 to the first rear-side drive shaft 1812. On the other hand, when the first driving-force connection and disconnection unit 251 is brought into a disconnected state, the rotational driving force is not transmitted from the first front-side drive shaft 1811 to the first rear-side drive shaft 1812.

The second driving-force connection and disconnection unit 252 is disposed between the second front-side drive shaft 1821 and the second rear-side drive shaft 1822. When the second driving-force connection and disconnection unit 252 is brought into a connected state, the rotational driving force is transmitted from the second front-side drive shaft 1821 to the second engine-side drive shaft 182. On the other hand, when the second driving-force connection and disconnection unit 252 is brought into a disconnected state, the rotational driving force is not transmitted from the second front-side drive shaft 1821 to the second rear-side drive shaft 1822.

Rotor drive shafts 17 include a first rotor drive shaft 171 and a second rotor drive shaft 172.

The first rotor drive shaft 171 is a substantially rod-shaped member for rotating the first horizontal-flight rotor 121. The first horizontal-flight rotor 121 is connected to a rear end portion of the first rotor drive shaft 171 in such a manner as to be non-rotatable relative to the first rotor drive shaft 171. A first pulley 231 is connected to a front end portion of the first rotor drive shaft 171 in such a manner as to be non-rotatable relative to the first rotor drive shaft 171.

The second rotor drive shaft 172 is a substantially rod-shaped member for rotating the second horizontal-flight rotor 122. The second horizontal-flight rotor 122 is connected to a rear end portion of the second rotor drive shaft 172 in such a manner as to be non-rotatable relative to the second rotor drive shaft 172. A fourth pulley 234 is connected to a front end portion of the second rotor drive shaft 172 in such a manner as to be non-rotatable relative to the second rotor drive shaft 172.

The driving-force transmission unit 16 includes a first driving-force transmission unit 161 and a second driving-force transmission unit 162. As the first driving-force transmission unit 161 and the second driving-force transmission unit 162, for example, a belt, a transmission bar, a gear train, or the like can be employed. In the present embodiment, belts are shown as examples of the first driving-force transmission unit 161 and the second driving-force transmission unit 162.

The first driving-force transmission unit 161 is configured to extend along a direction intersecting an axial direction of the first rotor drive shaft 171 or the first engine-side drive shaft 181. Specifically, the axial direction of the first rotor drive shaft 171 or the first engine-side drive shaft 181 extends along the front and rear directions. In addition, the first driving-force transmission unit 161 extends along the left and right directions. Hence, here, the axial direction of the first rotor drive shaft 171 or the first engine-side drive shaft 181 and the first driving-force transmission unit 161 are orthogonal to each other. In this way, the first rotor drive shaft 171 can be arranged on the left side. Specifically, the first driving-force transmission unit 161, which is a belt, is laid between the first pulley 231 and the second pulley 232. With such a configuration, the first driving-force transmission unit 161 drivingly connects the first rotor drive shaft 171 and the first engine-side drive shaft 181.

The second driving-force transmission unit 162 is configured to extend along a direction intersecting an axial direction of the second rotor drive shaft 172 or the second engine-side drive shaft 182. Specifically, the axial direction of the second rotor drive shaft 172 or the second engine-side drive shaft 182 extends along the front and rear directions. In addition, the second driving-force transmission unit 162 extends along the left and right directions. Hence, here, the axial direction of the second rotor drive shaft 172 or the second engine-side drive shaft 182 and the second driving-force transmission unit 162 are orthogonal to each other. In this way, the second rotor drive shaft 172 can be arranged on the right side. Specifically, the second driving-force transmission unit 162, which is a belt, is laid between the third pulley 233 and the fourth pulley 234. With such a configuration, the second driving-force transmission unit 162 drivingly connects the second rotor drive shaft 172 and the second engine-side drive shaft 182.

When the first driving-force transmission unit 161 and the second driving-force transmission unit 162 extend along the direction orthogonal to each rotor drive shaft 17 and each engine-side drive shaft 18, the first rotor drive shaft 171 and the second rotor drive shaft 172 can be separated away from each other. Specifically, it is assumed that the distance between the first rotor drive shaft 171 and the second rotor drive shaft 172 is represented by L10, the radius of the first horizontal-flight rotor 121 is represented by L11, and the radius of the second horizontal-flight rotor 122 is represented by L12. In this case, L10 is set to be longer than the length obtained by adding L11 and L12. In this way, it is possible to sufficiently separate the first horizontal-flight rotor 121 and the second horizontal-flight rotor 122, and suppress physical contact, and further aerodynamic interference, between the first horizontal-flight rotor 121 and the second horizontal-flight rotor 122 during rotation.

The power generator 15 are devices which generate electric power by using the driving force of the engine 40. The power generator 15 include the power generator 151 and the power generator 152. The power generator 151 is connected to a first crankshaft 412 of the first engine unit 41, which will be described later, via a power generator-side drive shaft 261. The power generator 152 is connected to a second crankshaft 422 of the second engine unit 42, which will be described later, via a power generator-side drive shaft 262. The aforementioned vertical-flight rotors 11 are rotated by electric powers generated by the power generator 151 and the power generator 152.

Hereinafter, an operation of the engine 40 rotating the horizontal-flight rotors 12 will be described.

First, in the case of rotating the first horizontal-flight rotor 121 and the second horizontal-flight rotor 122, the first driving-force connection and disconnection unit 251 and the second driving-force connection and disconnection unit 252 are brought into a connected state. When the engine 40 is operated in this state, the rotational driving force generated by the rotation of the first engine unit 41 is transmitted through the first front-side drive shaft 1811, the first driving-force connection and disconnection unit 251, the first rear-side drive shaft 1812, the first driving-force transmission unit 161, and the first rotor drive shaft 171 in this order to rotate the first horizontal-flight rotor 121. In addition, the rotational driving force of the first engine unit 41 is also transmitted to the power generator 151 via the power generator-side drive shaft 261, and the power generator 151 executes a power-generating operation. On the other hand, the rotational driving force generated by the rotation of the second engine unit 42 is transmitted through the second front-side drive shaft 1821, the second driving-force connection and disconnection unit 252, the second rear-side drive shaft 1822, the second driving-force transmission unit 162, and the second rotor drive shaft 172 in this order to rotate the second horizontal-flight rotor 122. In addition, the rotational driving force of the second engine unit 42 is also transmitted to the power generator 152 via the power generator-side drive shaft 262, and this causes the power generator 152 to execute a power-generating operation. By the rotations of the first horizontal-flight rotor 121 and the second horizontal-flight rotor 122, thrust for allowing the flight device 10 to fly in the front direction can be obtained.

On the other hand, in the case of not rotating the first horizontal-flight rotor 121 and the second horizontal-flight rotor 122, the first driving-force connection and disconnection unit 251 and the second driving-force connection and disconnection unit 252 are brought into a disconnected state. Hence, all the driving forces generated by the rotations of the first engine unit 41 and the second engine unit 42 can be allocated to the power generator 151 and the power generator 152, thus increasing the amount of electric power generated.

FIG. 3 is a top view showing a vicinity of the engine 40 of the flight device 10. The engine 40 is an opposed engine.

The engine 40 includes the first engine unit 41 and the second engine unit 42 which is arranged opposite to the first engine unit 41. The first engine unit 41 and the second engine unit 42 are housed inside a casing block 43.

The first engine unit 41 includes a first piston 411, a first crankshaft 412, and a first connecting rod 413. The first connecting rod 413 rotatably connects the first piston 411 and the first crankshaft 412.

The second engine unit 42 includes a second piston 421, a second crankshaft 422, and a second connecting rod 423. The second connecting rod 423 rotatably connects the second piston 421 and the second crankshaft 422.

In addition, the first crankshaft 412 has a front end portion connected to the power generator-side drive shaft 261, and a rear end portion connected to the first engine-side drive shaft 181. The second crankshaft 422 has a front end portion connected to the power generator-side drive shaft 262, and a rear end portion connected to the second engine-side drive shaft 182.

The first piston 411 and the second piston 421 are arranged inside a cylinder 44. In addition, inside the cylinder 44, a space sandwiched by the first piston 411 and the second piston 421 is a combustion chamber 45. The first piston 411 and the second piston 421 reciprocate to face each other inside the cylinder 44. By this reciprocation, the first crankshaft 412 and the second crankshaft 422 are rotated. The rotation direction of the first crankshaft 412 and the rotation direction of the second crankshaft 422 are opposite to each other.

When the engine 40 includes the first engine unit 41 and the second engine unit 42 which are arranged opposite to each other, vibrations at the time of the operation become very small. Hence, malfunctions of various sensors mounted on the flight device 10, for example, an acceleration sensor, an orientation sensor, and the like due to vibrations generated at the time of the operation of the engine 40 are suppressed.

The flight device 10 having the configuration shown FIG. 1 to FIG. 3 executes vertical takeoff, hovering, horizontal flight, and vertical landing as follows.

With reference to FIG. 1, in the vertical takeoff, the first motor 131 to the fourth motor 134 rotate the first sub-rotor 111 to the fourth sub-rotor 114 at predetermined rotational speeds. In this way, the flight device 10 floats from a landing surface such as a ground, and ascends until reaching to a predetermined altitude. Along with the ascending, the arithmetic control unit 29 separately controls the rotational speeds of the first motor 131 to the fourth motor 134 such that the positional orientation of the flight device 10 in the air becomes a predetermined positional orientation, based on outputs of the respective sensors. In addition, with reference to FIG. 2, in the vertical takeoff, the arithmetic control unit 29 brings the driving-force connection and disconnection unit 25 into the disconnected state, so that the driving force of the engine 40 is not transmitted to the horizontal-flight rotors 12, and thus, the horizontal-flight rotors 12 do not rotate. In this way, all or most of the driving force of the engine 40 can be supplied to the power generator 15. Hence, the amount of electric power generated by the power generator 15 can be increased to drive the first motor 131 to the fourth motor 134 at high speeds, and to thus rotate the first sub-rotor 111 to the fourth sub-rotor 114 at high speeds, allowing the flight device 10 to take off at a high speed. In the vertical takeoff, the electric power generated by the engine 40 is directly supplied to the first motor 131 to the fourth motor 134 without through a battery. The same applies to the time of hovering and the time of landing.

In the hovering, the first motor 131 to the fourth motor 134 are rotated to rotate the first motor 131 to the fourth motor 134 at predetermined speeds, based on an instruction of the arithmetic control unit 29. In addition, the arithmetic control unit 29 separately adjusts the rotational speeds of the first motor 131 to the fourth motor 134 such that the positional orientation of the flight device 10 in the air becomes a predetermined positional orientation. In this way, the flight device 10 can execute the hovering to make the altitude and the positional orientation constant in the air. In the hovering as well, the arithmetic control unit 29 brings the first driving-force connection and disconnection unit 251 and the second driving-force connection and disconnection unit 252 into the disconnected state, so that the first horizontal-flight rotor 121 and the second horizontal-flight rotor 122 are not rotated. Hence, the power generator 151 and the power generator 152 can generate electric power by using all the driving forces generated by the operations of the first engine unit 41 and the first engine unit 41.

When transitioning from the vertical takeoff to the horizontal flight, the arithmetic control unit 29 brings the first driving-force connection and disconnection unit 251 and the second driving-force connection and disconnection unit 252 into the connected state. With reference to FIG. 2, this causes the rotational driving force of the first engine unit 41 of the engine 40 to be transmitted to the first horizontal-flight rotor 121 through the first engine-side drive shaft 181, the first driving-force transmission unit 161, and the first rotor drive shaft 171. This causes the first horizontal-flight rotor 121 to rotate at a predetermined rotational speed. Similarly, the rotational driving force of the second engine unit 42 of the engine 40 is transmitted to the second horizontal-flight rotor 122 through the second engine-side drive shaft 182, the second driving-force transmission unit 162, and the second rotor drive shaft 172. This causes the second horizontal-flight rotor 122 to rotate at a predetermined rotational speed. Once the first horizontal-flight rotor 121 and the second horizontal-flight rotor 122 start to rotate, the flight device 10 starts to move along the horizontal travel in the front direction. At this time, the arithmetic control unit 29 continues to rotate the first motor 131 to the fourth motor 134, so that the first sub-rotor 111 to the fourth sub-rotor 114 continue to rotate. In this way, the arithmetic control unit 29 starts the horizontal direction while stably floating by the rotations of the first sub-rotor 111 to the fourth sub-rotor 114.

In the horizontal flight, the first horizontal-flight rotor 121 and the second horizontal-flight rotor 122 rotate at high speeds, and the flight device 10 thus can fly along the horizontal travel at a high speed. At this time, the arithmetic control unit 29 does not rotate the first motor 131 to the fourth motor 134 to bring the first sub-rotor 111 to the fourth sub-rotor 114 into a stopped state.

When transitioning from the horizontal flight to the vertical landing, the arithmetic control unit 29 reduces the output of the engine 40 to slow down the rotational speeds of the first horizontal-flight rotor 121 and the second horizontal-flight rotor 122. This causes the moving speed of the flight device 10 to slow down. At the same time, the arithmetic control unit 29 rotationally drives the first motor 131 to the fourth motor 134 to rotate the first sub-rotor 111 and the fourth sub-rotor 114, thus obtaining a predetermined floating force.

In the vertical landing, the arithmetic control unit 29 adjust the rotational speeds of the first motor 131 and the fourth motor 134 to rotate the first sub-rotor 111 to the fourth sub-rotor 114 at predetermined rotational speeds. This causes the flight device 10 to gradually lower the altitude until landing on the ground. In this event, the arithmetic control unit 29 brings the first driving-force connection and disconnection unit 251 and the second driving-force connection and disconnection unit 252 into the disconnected state, so that the first horizontal-flight rotor 121 and the second horizontal-flight rotor 122 are not rotated. In this way, a large amount of the rotational driving force of the engine 40 can be distributed to the power generator 151 and the power generator 152, so that the amount of electric power generated can be increased. Hence, the first motor 131 to the fourth motor 134 can be stably rotated by the large amount of electric power generated by the power generator 151 and the power generator 152.

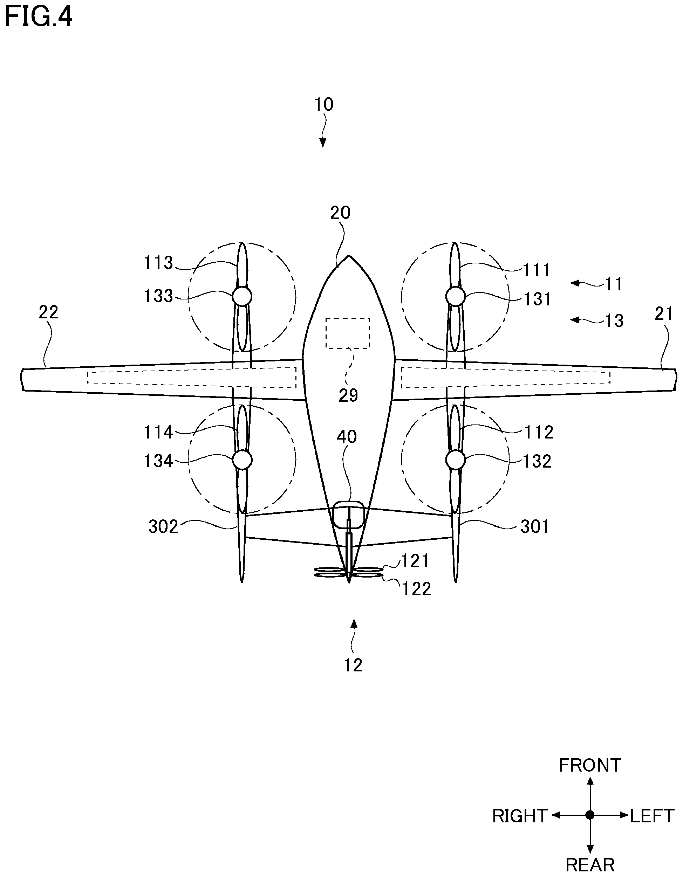

With reference to FIG. 4 to FIG. 6, a configuration of a flight device 10 according to another embodiment will be described. A basic configuration and a basic operation of the flight device 10 shown in FIG. 4 to FIG. 6 are the same as those shown in FIG. 1. In the flight device 10 shown in FIG. 4 to FIG. 6, a first horizontal-flight rotor 121 and a second horizontal-flight rotor 122 are arranged in a stacked manner on the rear end side of a main body portion 20. This matter will be mainly described below.

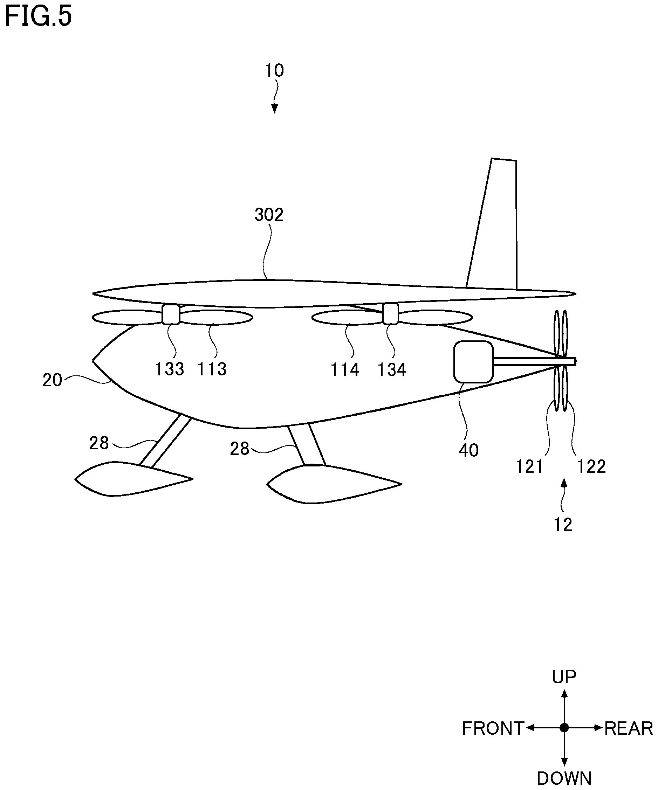

FIG. 4 is a top view showing the flight device 10 according to the other embodiment. FIG. 5 is a side view showing the flight device 10 according to the other embodiment.

With reference to FIG. 4 and FIG. 5, the flight device 10 includes the first horizontal-flight rotor 121 and the second horizontal-flight rotor 122 which are arranged in a stacked manner as horizontal-flight rotors 12. The horizontal-flight rotors 12 having such a configuration are also called a pusher. The first horizontal-flight rotor 121 and the second horizontal-flight rotor 122 are rotationally driven by an engine 40.

The flight device 10 includes the main body portion 20, a first wing portion 21, and a second wing portion 22. In addition, an outrigger 301 is arranged on a lower portion of the first wing portion 21, and an outrigger 302 is arranged on a lower portion of the second wing portion 22.

The flight device 10 includes a first sub-rotor 111 to a fourth sub-rotor 114 and a first motor 131 to a fourth motor 134 as in the case shown in FIG. 1. The first sub-rotor 111 and the first motor 131 are arranged on a front portion of the outrigger 301. The second sub-rotor 112 and the second motor 132 are arranged on a rear portion of the outrigger 301. The third sub-rotor 113 and the third motor 133 are arranged on a front portion of the outrigger 302. The fourth sub-rotor 114 and the fourth motor 134 are arranged on a rear portion of the outrigger 302.

Bladder tanks for storing a fuel are arranged inside the first wing portion 21 and the second wing portion 22. Moreover, devices included in a control system such as the arithmetic control unit 29, a cargo to be transported by the flight device 10, a battery for supplying an electric power to electric devices included in the flight device 10, and the like are disposed inside the main body portion 20.

With reference to FIG. 5, leg portions 28 are installed below the main body portion 20. The leg portions 28 are portions which come into contact with a ground at the time of the landing of the flight device 10.

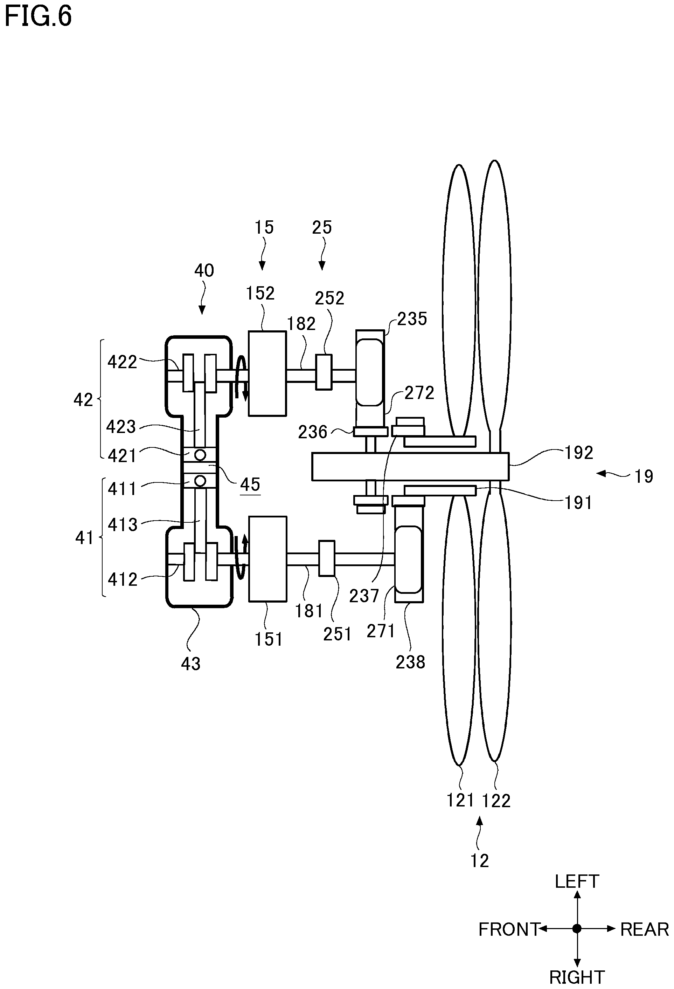

FIG. 6 is a top view showing a vicinity of the engine 40 and the horizontal-flight rotors 12 of the flight device 10 according to the other embodiment. A basic configuration and a basic operation of the engine 40 and the horizontal-flight rotors 12 shown in FIG. 6 are the same as those described with reference to FIG. 2.

Here, a drive shaft 19 which drivingly connects the engine 40 and the horizontal-flight rotors 12 is shown. The drive shaft 19 includes a first drive shaft 191 which drivingly connects the engine 40 and the first horizontal-flight rotor 121 and a second drive shaft 192 which drivingly connects the engine 40 and the second horizontal-flight rotor 122. This configuration will be described in detail below.

The power generator 151 is arranged rearward of the first engine unit 41, and is rotationally driven by a first engine-side drive shaft 181. Specifically, the power generator 151 includes a rotor, which is not shown, and this rotor is connected to the first engine-side drive shaft 181 in such a manner as to be non-rotatable relative to the first engine-side drive shaft 181. With this configuration, the rotor incorporated in the power generator 151 rotates together with the first engine-side drive shaft 181, so that electric power is generated by the power generator 151.

A configuration of the power generator 152 is the same as that of the power generator 151. Specifically, the power generator 152 is arranged rearward of the second engine unit 42, and is rotationally driven by the second engine-side drive shaft 182. The power generator 152 includes a rotor, which is not shown, and this rotor is connected to the second engine-side drive shaft 182 in such a manner as to be non-rotatable relative to the second engine-side drive shaft 182. With this configuration, the rotor incorporated in the power generator 152 rotates together with the second engine-side drive shaft 182, so that electric power is generated by the power generator 152.

The drive shaft 19 is a substantially shaft-shaped member which is rotated by a driving force generated from the engine 40 to rotate the aforementioned horizontal-flight rotors 12. The drive shaft 19 includes the first drive shaft 191, which is rotated by the first engine unit 41, and the second drive shaft 192, which is rotated by the second engine unit 42. The drive shaft 19 has a mechanism mechanically and coaxially rotated in the opposite directions.

The first drive shaft 191 has a rear end connected to the first horizontal-flight rotor 121 to rotate the first horizontal-flight rotor 121. A vicinity of a front end of the first drive shaft 191 is drivingly connected to the first engine-side drive shaft 181 via a first belt 271. That is, a rotational driving force generated by the first engine unit 41 is transmitted to the first drive shaft 191 through the first engine-side drive shaft 181 and the first belt 271.

The second drive shaft 192 has a rear end connected to the second horizontal-flight rotor 122 to rotate the second horizontal-flight rotor 122. A vicinity of a front end of the second drive shaft 192 is drivingly connected to the second engine-side drive shaft 182 via a second belt 272. That is, a rotational driving force generated by the second engine unit 42 is transmitted to the second drive shaft 192 through the second engine-side drive shaft 182 and the second belt 272.

The first drive shaft 191 and the second drive shaft 192 are coaxially arranged. Specifically, the first drive shaft 191 has a hollow structure, and the second drive shaft 192 is arranged inside the first drive shaft 191. A substantially cylindrical space is formed inside the first drive shaft 191, and the second drive shaft 192 penetrates this space. In addition, the rear end of the second drive shaft 192 is arranged rearward of the rear end of the first drive shaft 191. Moreover, the front end of the second drive shaft 192 is arranged frontward of the front end of the first drive shaft 191. Furthermore, the first drive shaft 191 and the second drive shaft 192 form a coaxial contra-rotating structure.

The first belt 271 transmits the rotational driving force of the first engine-side drive shaft 181 to the first drive shaft 191. Specifically, the first belt 271 is laid between an eighth pulley 238 and a seventh pulley 237. The eighth pulley 238 is connected to a rear end portion of the first engine-side drive shaft 181 in such a manner as to be non-rotatable relative to the first engine-side drive shaft 181. The seventh pulley 237 is connected to a front end of the first drive shaft 191 in such a manner as to be non-rotatable relative to the first drive shaft 191. The first belt 271 is laid between the eighth pulley 238 and the seventh pulley 237. With this configuration, at the time of the flight of the flight device 10, the first engine unit 41 is operated to rotate the first engine-side drive shaft 181 and the eighth pulley 238. In addition, a rotational driving force of the eighth pulley 238 is transmitted to the seventh pulley 237 via the first belt 271. This causes the first drive shaft 191 and the first horizontal-flight rotor 121 to rotate.

The configuration of the second belt 272 is the same as that of the first belt 271. That is, the second belt 272 transmits the rotational driving force of the second engine-side drive shaft 182 to the second drive shaft 192. A fifth pulley 235 is connected to a rear end portion of the second engine-side drive shaft 182 in such a manner as to be non-rotatable relative to the second engine-side drive shaft 182. A sixth pulley 236 is connected to an intermediate portion of the second drive shaft 192 in such a manner as to be non-rotatable relative to the second drive shaft 192. The second belt 272 is laid between the fifth pulley 235 and the sixth pulley 236. With this configuration, at the time of the flight of the flight device 10, the second engine unit 42 is operated to rotate the second engine-side drive shaft 182 and the fifth pulley 235. In addition, a rotational driving force of the fifth pulley 235 is transmitted to the sixth pulley 236 via the second belt 272. This causes the second drive shaft 192 and the second horizontal-flight rotor 122 to rotate.

A driving-force connection and disconnection unit 25 may be interposed on the engine-side drive shafts 18 here too. The driving-force connection and disconnection unit 25 includes a first driving-force connection and disconnection unit 251 and a second driving-force connection and disconnection unit 252.

The first driving-force connection and disconnection unit 251 is interposed in a middle portion of the first engine-side drive shaft 181, between the power generator 151 and the eighth pulley 238. When the first driving-force connection and disconnection unit 251 is brought into the connected state, the first drive shaft 191 and the first horizontal-flight rotor 121 can be rotated via the first engine-side drive shaft 181 by the rotational driving force generated by the operation of the first engine unit 41. At the same time, the generation of electric power by the power generator 151 is also conducted. On the other hand, when the first driving-force connection and disconnection unit 251 is brought into the disconnected state, the rotational driving force generated by the operation of the first engine unit 41 is not transmitted to the first drive shaft 191 and the first horizontal-flight rotor 121, so that the first drive shaft 191 and the first horizontal-flight rotor 121 are not rotated. In this disconnected state as well, the generation of electric power by the power generator 151 is continued.

The second driving-force connection and disconnection unit 252 is interposed in a middle portion of the second engine-side drive shaft 182, between the power generator 152 and the fifth pulley 235. When the second driving-force connection and disconnection unit 252 is brought into the connected state, the second drive shaft 192 and the second horizontal-flight rotor 122 can be rotated via the second engine-side drive shaft 182 by the rotational driving force generated by the operation of the second engine unit 42. At the same time, the generation of electric power by the power generator 152 is also conducted. On the other hand, when the second driving-force connection and disconnection unit 252 is brought into the disconnected state, the rotational driving force generated by the operation of the second engine unit 42 is not transmitted to the second drive shaft 192 and the second horizontal-flight rotor 122, so that the second drive shaft 192 and the second horizontal-flight rotor 122 are not rotated. In this disconnected state as well, the generation of electric power by the power generator 152 is continued.

The operation of the flight device 10 described in FIG. 4 to FIG. 6 is the same as that of the flight device 10 shown in FIG. 1 to FIG. 3. Specifically, the flight device 10 having the configuration shown in FIG. 4 to FIG. 6 executes vertical takeoff, hovering, horizontal flight, and vertical landing as follows.

With reference to FIG. 4, in the vertical takeoff, the first motor 131 to the fourth motor 134 rotate the first sub-rotor 111 to the fourth sub-rotor 114 at predetermined rotational speeds. In this way, the flight device 10 floats from a landing surface such as a ground, and ascends until reaching to a predetermined altitude. Along with the ascending, the arithmetic control unit 29 separately controls the rotational speeds of the first motor 131 to the fourth motor 134 such that the positional orientation of the flight device 10 in the air becomes a predetermined positional orientation, based on outputs of the respective sensors. In addition, in the vertical takeoff, the arithmetic control unit 29 brings the first driving-force connection and disconnection unit 251 and the second driving-force connection and disconnection unit 252 shown in FIG. 6 into the disconnected state, so that the driving forces of the first engine unit 41 and the second engine unit 42 are not transmitted to the first horizontal-flight rotor 121 and the second horizontal-flight rotor 122, and thus, the first horizontal-flight rotor 121 and the second horizontal-flight rotor 122 do not rotate. In this way, all or most of the driving forces of the first engine unit 41 and the second engine unit 42 can be supplied to the power generator 151 and the power generator 152. Hence, the amounts of electric power generated by the power generator 151 and the power generator 152 can be increased to drive the first motor 131 to the fourth motor 134 at high speeds, and to thus rotate the first sub-rotor 111 to the fourth sub-rotor 114 at high speeds, allowing the flight device 10 to take off at a high speed. In the vertical takeoff, the electric power generated by the engine 40 can be directly supplied to the first motor 131 to the fourth motor 134 without through a battery. The same applies to the time of hovering and the time of landing.

In the hovering, the first motor 131 to the fourth motor 134 are rotated to rotate the first motor 131 to the fourth motor 134 at predetermined speeds, based on an instruction of the arithmetic control unit 29. In addition, the arithmetic control unit 29 separately adjusts the rotational speeds of the first motor 131 to the fourth motor 134 such that the positional orientation of the flight device 10 in the air becomes a predetermined positional orientation. In this way, the flight device 10 can execute the hovering to make the altitude and the positional orientation constant in the air. In the hovering as well, the arithmetic control unit 29 brings the first driving-force connection and disconnection unit 251 and the second driving-force connection and disconnection unit 252 into the disconnected state, so that the first horizontal-flight rotor 121 and the second horizontal-flight rotor 122 are not rotated. Hence, the power generator 151 and the power generator 152 can generate electric power by using all the driving forces generated by the operations of the first engine unit 41 and the first engine unit 41.

When transitioning from the vertical takeoff to the horizontal flight, the arithmetic control unit 29 brings the first driving-force connection and disconnection unit 251 and the second driving-force connection and disconnection unit 252 into the connected state. With reference to FIG. 6, this causes the rotational driving force of the first engine unit 41 of the engine 40 to be transmitted to the first horizontal-flight rotor 121 through the first engine-side drive shaft 181, the first driving-force connection and disconnection unit 251 and the first belt 271. This causes the first horizontal-flight rotor 121 to rotate at a predetermined rotational speed. Similarly, the rotational driving force of the second engine unit 42 of the engine 40 is transmitted to the second horizontal-flight rotor 122 through the second engine-side drive shaft 182, the second driving-force connection and disconnection unit 252, and the second belt 272. This causes the second horizontal-flight rotor 122 to rotate at a predetermined rotational speed. Once the first horizontal-flight rotor 121 and the second horizontal-flight rotor 122 start to rotate, the flight device 10 starts to move along the horizontal direction, that is, in the front direction. At this time, the arithmetic control unit 29 continues to rotate the first motor 131 to the fourth motor 134, so that the first sub-rotor 111 to the fourth sub-rotor 114 continue to rotate. In this way, the arithmetic control unit 29 starts the horizontal direction while stably floating by the rotations of the first sub-rotor 111 to the fourth sub-rotor 114.

In the horizontal flight, the first horizontal-flight rotor 121 and the second horizontal-flight rotor 122 rotate at high speeds, and the flight device 10 thus can fly along the horizontal direction, that is, in the front direction, at a high speed. At this time, the arithmetic control unit 29 does not rotate the first motor 131 to the fourth motor 134 to bring the first sub-rotor 111 to the fourth sub-rotor 114 into a stopped state.

When transitioning from the horizontal flight to the vertical landing, the arithmetic control unit 29 reduces the output of the engine 40 to slow down the rotational speeds of the first horizontal-flight rotor 121 and the second horizontal-flight rotor 122. This causes the moving speed of the flight device 10 to slow down. At the same time, the arithmetic control unit 29 rotationally drives the first motor 131 to the fourth motor 134 to rotate the first sub-rotor 111 and the fourth sub-rotor 114, thus obtaining a predetermined floating force.

In the vertical landing, the arithmetic control unit 29 adjusts the rotational speeds of the first motor 131 and the fourth motor 134 to rotate the first sub-rotor 111 to the fourth sub-rotor 114 at predetermined rotational speeds. This causes the flight device 10 to gradually lower the altitude until landing on the ground. In this event, the arithmetic control unit 29 brings the first driving-force connection and disconnection unit 251 and the second driving-force connection and disconnection unit 252 into the disconnected state, so that the first horizontal-flight rotor 121 and the second horizontal-flight rotor 122 are not rotated. In this way, a large amount of the rotational driving force of the engine 40 can be distributed to the power generator 151 and the power generator 152, so that the amount of electric power generated can be increased. Hence, the first motor 131 to the fourth motor 134 can be stably rotated by the large amount of electric power generated by the power generator 151 and the power generator 152.

According to the aforementioned embodiments, the following effects can be mainly achieved.

With reference to FIG. 2, the first horizontal-flight rotor 121 and the second horizontal-flight rotor 122 can be separately and highly efficiently rotated by rotating the first horizontal-flight rotor 121 with the first engine unit 41 and rotating the second horizontal-flight rotor 122 with the second engine unit 42.

With reference to FIG. 2, when the takeoff or the landing is conducted by rotating the vertical-flight rotors 11, the driving force of the engine 40 can be used for the generation of electric power or the like by shutting off the driving force transmission to the horizontal-flight rotors 12 with the driving-force connection and disconnection unit 25. On the other hand, when the horizontal flight is conducted by using the horizontal-flight rotors 12, the horizontal-flight rotors 12 can be highly efficiently rotated by the engine 40 by transmitting the driving force with the driving-force connection and disconnection unit 25.

With reference to FIG. 2, at the time of the takeoff, the hovering, and the landing, and the like, when the driving-force connection and disconnection unit 25 is in the disconnected state, a large amount of the driving force of the engine 40 can be allocated to the power generator 15, so that the amount of electric power generated from the power generator 15 can be increased, and the electric power can be allocated to the rotations of the other rotor s, and the like.

With reference to FIG. 2, since the first driving-force transmission unit 161 and the second driving-force transmission unit 162 extend along the direction orthogonal to each rotor drive shaft 17 and each engine-side drive shaft 18, the first rotor drive shaft 171 and the second rotor drive shaft 172 can be separated away from each other. Hence, interference between the first horizontal-flight rotor 121 and the second horizontal-flight rotor 122 at the time of the rotation can be suppressed.

With reference to FIG. 6, since the first horizontal-flight rotor 121 and the second horizontal-flight rotor 122 which are arranged to be placed on each other are included, the horizontal flight can be effectively executed.

With reference to FIG. 6, since the first drive shaft 191 and the second drive shaft 192 are coaxially arranged, the second horizontal-flight rotor 122 and the second horizontal-flight rotor 122 which are arranged to be placed on each other can be effectively rotationally operated.

Although the embodiments of the present invention have been described above, the present invention is not limited to these, and can be modified without departing from the gist of the present invention. In addition, it is possible to combine the aforementioned embodiments with each other.

Inventions that can be grasped from the above-described present embodiments will be described below together with the effects.

A flight device of the present invention includes: a vertical-flight rotor; and a horizontal-flight rotor, wherein the vertical-flight rotor is rotated by a motor, and the horizontal-flight rotor is drivingly connected and rotated by an engine. According to the flight device of the present invention, since the vertical-flight rotor is rotated by the motor, the rotational speed of the vertical-flight rotor can be highly precisely controlled by the motor at the time of the takeoff and landing. In addition, at the time of the horizontal flight, since the engine drivingly rotates the horizontal-flight rotor, the horizontal-flight rotor can be highly efficiently rotated, and the continuous flight distance of the flight device can be increased.

In addition, in the flight device of the present invention, a driving-force connection and disconnection unit is disposed between the engine and the horizontal-flight rotor. According to the flight device of the present invention, when the takeoff or the landing is conducted by rotating the vertical-flight rotor, the driving force of the engine can be actively used for the generation of electric power or the like by shutting off the driving force transmission to the horizontal-flight rotor with the driving-force connection and disconnection unit. On the other hand, when the horizontal flight is conducted by using the horizontal-flight rotor, the horizontal-flight rotor can be highly efficiently rotated by the engine by transmitting the driving force with the driving-force connection and disconnection unit, enabling the operation of the flight device at a high speed, and thus extending the continuous flight distance.

In addition, the flight device of the present invention further includes a power generator which is driven by the engine. According to the flight device of the present invention, when the driving-force connection and disconnection unit is in the disconnected state, a large amount of the driving force of the engine can be allocated to the power generator, so that the amount of electric power generated from the power generator can be increased, and the electric power can be allocated to the rotations of the other rotors, and the like.

In addition, the flight device of the present invention further includes: a driving-force transmission unit; and a rotor drive shaft, in which the horizontal-flight rotor includes a first horizontal-flight rotor and a second horizontal-flight rotor, the driving-force transmission unit includes a first driving-force transmission unit and a second driving-force transmission unit, the rotor drive shaft includes a first rotor drive shaft and a second rotor drive shaft, the first horizontal-flight rotor is rotated via the first rotor drive shaft, the second horizontal-flight rotor is rotated via the second rotor drive shaft, a first engine-side drive shaft and a second engine-side drive shaft extend from the engine, the first driving-force transmission unit is configured to extend along a direction intersecting an axial direction of the first rotor drive shaft or the first engine-side drive shaft, and drivingly connects the first rotor drive shaft and the first engine-side drive shaft, and the second driving-force transmission unit is configured to extend along a direction intersecting an axial direction of the second rotor drive shaft or the second engine-side drive shaft, and drivingly connects the second rotor drive shaft and the second engine-side drive shaft. According to the flight device of the present invention, since the first driving-force transmission unit and the second driving-force transmission unit extend along the direction, for example, orthogonal to each rotor drive shaft and each engine-side drive shaft, the first rotor drive shaft and the second rotor drive shaft can be separated away from each other. Hence, interference between the first horizontal-flight rotor and the second horizontal-flight rotor at the time of the rotation can be suppressed.

In addition, in the flight device of the present invention, the engine includes a first engine unit and a second engine unit which is arranged opposite to the first engine unit, the horizontal-flight rotor includes a first horizontal-flight rotor and a second horizontal-flight rotor, the first horizontal-flight rotor is rotated by the first engine unit, and the second horizontal-flight rotor is rotated by the second engine unit. According to the flight device of the present invention, the first horizontal-flight rotor and the second horizontal-flight rotor can be separately and highly efficiently rotated by rotating the first horizontal-flight rotor with the first engine unit and rotating the second horizontal-flight rotor with the second engine unit.

In addition, the flight device of the present invention further includes a drive shaft which is drivingly connects the engine and the horizontal-flight rotor, wherein the horizontal-flight rotor includes a first horizontal-flight rotor and a second horizontal-flight rotor which is arranged to be placed on the first horizontal-flight rotor, and the drive shaft includes a first drive shaft which drivingly connects the engine and the first horizontal-flight rotor and a second drive shaft which drivingly connects the engine and the second horizontal-flight rotor. According to the flight device of the present invention, since the first horizontal-flight rotor and the second horizontal-flight rotor which are arranged to be placed on each other are included, the horizontal flight can be effectively executed.

In addition, in the flight device of the present invention, the first drive shaft and the second drive shaft are coaxially arranged. According to the flight device of the present invention, since the first drive shaft and the second drive shaft are coaxially arranged, the first horizontal-flight rotor and the second horizontal-flight rotor which are arranged to be placed on each other can be effectively rotationally operated.

### REFERENCE SIGNS LIST

- 10: flight device
- 11: vertical-flight rotor
- 111: first sub-rotor
- 112: second sub-rotor
- 113: third sub-rotor
- 114: fourth sub-rotor
- 12: horizontal-flight rotor
- 121: first horizontal-flight rotor
- 122: second horizontal-flight rotor
- 13: motor
- 131: first motor
- 132: second motor
- 133: third motor
- 134: fourth motor
- 15: power generator
- 151: power generator
- 152: power generator
- 16: driving-force transmission unit
- 161: first driving-force transmission unit
- 162: second driving-force transmission unit
- 17: rotor drive shaft
- 171: first rotor drive shaft
- 172: second rotor drive shaft
- 18: engine-side drive shaft
- 181: first engine-side drive shaft
- 1811: first front-side drive shaft
- 1812: first rear-side drive shaft
- 182: second engine-side drive shaft
- 1821: second front-side drive shaft
- 1822: second rear-side drive shaft
- 19: drive shaft
- 191: first drive shaft
- 192: second drive shaft
- 20: main body portion
- 21: first wing portion
- 22: second wing portion
- 231: first pulley
- 232: second pulley
- 233: third pulley
- 234: fourth pulley
- 235: fifth pulley
- 236: sixth pulley
- 237: seventh pulley
- 238: eighth pulley
- 241: first installation hole
- 242: second installation hole
- 243: third installation hole
- 244: fourth installation hole
- 25: driving-force connection and disconnection unit
- 251: first driving-force connection and disconnection unit
- 252: second driving-force connection and disconnection unit
- 261: power generator-side drive shaft
- 262: power generator-side drive shaft
- 271: first belt
- 272: second belt
- 28: leg portion
- 29: arithmetic control unit
- 301: outrigger
- 302: outrigger
- 40: engine
- 41: first engine unit
- 411: first piston
- 412: first crankshaft
- 413: first connecting rod
- 42: second engine unit
- 421: second piston
- 422: second crankshaft
- 423: second connecting rod
- 43: casing block
- 44: cylinder
- 45: combustion chamber

## Claims

1. A flight device comprising:
a vertical-flight rotor; and
a horizontal-flight rotor, wherein
the vertical-flight rotor is rotated by a motor, and
the horizontal-flight rotor is drivingly connected and rotated by an engine.

2. The flight device according to claim 1, wherein a driving-force connection and disconnection unit is disposed between the engine and the horizontal-flight rotor.

3. The flight device according to claim 2, further comprising a power generator which is driven by the engine.

4. The flight device according to claim 1, further comprising:
a driving-force transmission unit; and
a rotor drive shaft, wherein
the horizontal-flight rotor includes a first horizontal-flight rotor and a second horizontal-flight rotor,
the driving-force transmission unit includes a first driving-force transmission unit and a second driving-force transmission unit,
the rotor drive shaft includes a first rotor drive shaft and a second rotor drive shaft,
the first horizontal-flight rotor is rotated via the first rotor drive shaft,
the second horizontal-flight rotor is rotated via the second rotor drive shaft,
a first engine-side drive shaft and a second engine-side drive shaft extend from the engine,
the first driving-force transmission unit is configured to extend along a direction intersecting an axial direction of the first rotor drive shaft or the first engine-side drive shaft, and drivingly connects the first rotor drive shaft and the first engine-side drive shaft, and
the second driving-force transmission unit is configured to extend along a direction intersecting an axial direction of the second rotor drive shaft or the second engine-side drive shaft, and drivingly connects the second rotor drive shaft and the second engine-side drive shaft.

5. The flight device according to claim 1, wherein
the engine includes a first engine unit and a second engine unit which is arranged opposite to the first engine unit,
the horizontal-flight rotor includes a first horizontal-flight rotor and a second horizontal-flight rotor,
the first horizontal-flight rotor is rotated by the first engine unit, and
the second horizontal-flight rotor is rotated by the second engine unit.

6. The flight device according to claim 1, further comprising a drive shaft which drivingly connects the engine and the horizontal-flight rotor, wherein
the horizontal-flight rotor includes a first horizontal-flight rotor and a second horizontal-flight rotor which is arranged to be placed on the first horizontal-flight rotor, and
the drive shaft includes a first drive shaft which drivingly connects the engine and the first horizontal-flight rotor and a second drive shaft which drivingly connects the engine and the second horizontal-flight rotor.

7. The flight device according to claim 6, wherein the first drive shaft and the second drive shaft are coaxially arranged.

8. A flight device comprising:
a vertical-flight rotor;
a horizontal-flight rotor;
a power generator; and
a driving-force connection and disconnection unit, wherein
the vertical-flight rotor is rotated by a motor,
the horizontal-flight rotor is drivingly connected and rotated by an engine,
the power generator is driven by the engine,
the driving-force connection and disconnection unit is disposed between the engine and the horizontal-flight rotor,
when the driving-force connection and disconnection unit is brought into a connected state, a driving force is transmitted from the engine to the horizontal-flight rotor, and
when the driving-force connection and disconnection unit is brought into a disconnected state, the driving force is not transmitted from the engine to the horizontal-flight rotor, and the power generator is driven by the engine.

9. The flight device according to claim 8, further comprising:
a driving-force transmission unit; and
a rotor drive shaft, wherein
the horizontal-flight rotor includes a first horizontal-flight rotor and a second horizontal-flight rotor,
the driving-force transmission unit includes a first driving-force transmission unit and a second driving-force transmission unit,
the rotor drive shaft includes a first rotor drive shaft and a second rotor drive shaft,
the first horizontal-flight rotor is rotated via the first rotor drive shaft,
the second horizontal-flight rotor is rotated via the second rotor drive shaft,
a first engine-side drive shaft and a second engine-side drive shaft extend from the engine,
the first driving-force transmission unit is configured to extend along a direction intersecting an axial direction of the first rotor drive shaft or the first engine-side drive shaft, and drivingly connects the first rotor drive shaft and the first engine-side drive shaft, and
the second driving-force transmission unit is configured to extend along a direction intersecting an axial direction of the second rotor drive shaft or the second engine-side drive shaft, and drivingly connects the second rotor drive shaft and the second engine-side drive shaft.

10. The flight device according to claim 8, wherein
the engine includes a first engine unit and a second engine unit which is arranged opposite to the first engine unit,
the horizontal-flight rotor includes a first horizontal-flight rotor and a second horizontal-flight rotor,
the first horizontal-flight rotor is rotated by the first engine unit, and
the second horizontal-flight rotor is rotated by the second engine unit.

11. The flight device according to claim 8, further comprising a drive shaft which drivingly connects the engine and the horizontal-flight rotor, wherein
the horizontal-flight rotor includes a first horizontal-flight rotor and a second horizontal-flight rotor which is arranged to be placed on the first horizontal-flight rotor, and
the drive shaft includes a first drive shaft which drivingly connects the engine and the first horizontal-flight rotor and a second drive shaft which drivingly connects the engine and the second horizontal-flight rotor.

12. The flight device according to claim 11, wherein the first drive shaft and the second drive shaft are coaxially arranged.
